(19) **Europäisches Patentamt**
**European Patent Office**
**Office européen des brevets**

(11) **EP 1 746 124 B1**

(12) **EUROPEAN PATENT SPECIFICATION**

(45) Date of publication and mention
of the grant of the patent:
**14.04.2010 Bulletin 2010/15**

(51) Int Cl.:
***C08J 7/12*** (2006.01)

(21) Application number: **05254585.2**

(22) Date of filing: **22.07.2005**

(54) **Treatment of fluorinated plastics material**

Behandlung von Fluorkunststoff

Traitement de matière plastique fluorée

(84) Designated Contracting States:
**AT BE BG CH CY CZ DE DK EE ES FI FR GB GR
HU IE IS IT LI LT LU LV MC NL PL PT RO SE SI
SK TR**

(43) Date of publication of application:
**24.01.2007 Bulletin 2007/04**

(73) Proprietor: **AIR PRODUCTS AND CHEMICALS,
INC.
Allentown, PA 18195-1501 (US)**

(72) Inventor: **Taege, Reiner Reinhard Wilhelm
42379, Heiligenhaus (DE)**

(74) Representative: **Burford, Anthony Frederick
Beck Greener
Fulwood House
12 Fulwood Place
London
WC1V 6HR (GB)**

(56) References cited:
**EP-A- 0 816 418     US-A- 6 045 766
US-A- 6 140 243**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates generally to the treatment of fluorinated surface(s) of plastics material to reduce the level of or, preferably, eliminate acidic, fluorine-derived by-product(s) adsorbed thereon.

In recent years, industrialised nations have taken steps to lower emissions originating from automotive sources in order to improve air quality, in particular in urban areas. As a result, typical hydrocarbon based vehicle fuels have been supplemented with oxygenated components such as ethers and alcohols, e.g. methanol. The combination of the introduction of these new "clean" fuels (containing hydrophobic and hydrophilic components) on to the market and the high legislative standards for the emission of volatile organic compounds ("VOCs") represents a significant challenge to the established barrier fluorination techniques extensively used in the automotive industry. The new fuels and emission standards require techniques for the production of fluorinated surface barrier layers in fuel containers which allow only very low permeation of such fuels.

The permeation of liquids through polymer membranes is often described as a staged process involving wetting of the upstream substrate surface, "dissolution" of the liquid into the polymer, diffusion of the solute through the polymer and desorption of the solute on the downstream side of the membrane. Therefore, decreasing the wettability of a polymer membrane surface usually decreases the permeability of the membrane to liquids. One method of decreasing the wettability of a polymer membrane is by surface fluorination. Examples of processes to fluorinate surfaces of plastics materials using molecular fluorine, either undiluted or diluted in an inert carrier gas, are disclosed in EP-A-0816418,US-A-2129289, DE-A-1905094 and US-A-4869859. The fluorination of a polyolefin results in the formation of a fluorinated surface layer with selective repellent properties resulting in significantly reduced rates of gas, vapour and solvent permeation.

On an industrial scale, surface fluorination is usually carried out either "in-line" or "off-line".

With the "in-line" process, fluorination is an intrinsic part of a higher-level production process. The treatment is usually a high-pressure, high temperature process that is carried out while the plastic article is being formed within the mould. Therefore, the time available for fluorine treatment is usually short and ranges from about 1 to no more than about a few minutes.

In the "off-line" process, fluorination is usually applied to the finished plastics article and may be carried out temporally and spatially distant from the actual production of the plastic article. "Off-line" fluorine treatment processes are typically low-pressure processes performed at slightly elevated temperatures. Treatment time can take up to about two hours.

In the surface fluorination process, the polymeric substrate is usually exposed at ambient or elevated temperatures to fluorine or a fluorine-containing gas mixture. During this treatment, hydrogen, bonded within the polymer, is progressively replaced by fluorine (see Equations 1 to 3). Typically, the reactions between the polymer and fluorine take place instantaneously and do not require any specific activation.

### Equation 1

$$F_2 \quad + \quad RR'CH_2 \quad \rightarrow \quad RR'HC\bullet \quad + \quad HF \quad + \quad F$$

### Equation 2

$$F_2 \quad + \quad RR'HC\bullet \quad \rightarrow \quad RR'HCF \quad + \quad F$$

### Equation 3

$$F \quad + \quad RR'CH_2 \quad \rightarrow \quad RR'HC\bullet \quad HF$$

Hydrogen fluoride ("HF") is a by-product of the fluorination reactions and is virtually the only volatile product formed. After completion of the surface fluorination process, the fluorinated articles (such as plastics containers) are generally extensively purged in order to reduce the concentration of the HF by-product and/or any residual fluorine to a safe level, (i.e. < 0.1 ppm). Unfortunately, it is generally acknowledged within the industry that these purge procedures are not perfect and that they can leave a substantial amount of HF associated with the treated plastic article.

It is also known within the industry that degassing of this residue from such surface fluorinated plastics articles during the storage of freshly fluorinated plastics parts can generate a chemically aggressive atmosphere, in particular within hollow, surface fluorinated articles with restricted scope for gas-ambient air exchange, for example as would occur with fluorinated fuel tanks and other containers. In particular, the presence of humid air can contribute to these undesired effects through the formation of hydrofluoric acid-containing aerosols within the hollow articles (see Equation 4).

<u>Equation 4</u>

$$\mathrm{HF} \quad + \quad \mathrm{H_2O} \quad \rightarrow \quad \mathrm{HF_{aq}} \quad (\mathrm{or} \ \mathrm{H_3O^+F^-})$$

During typical surface fluorination processes, HF is formed in substantial quantities, not only on the surface of the polymer substrates but also within the subsurface polymer layers.

In typical off-line barrier fluorination processes, barrier layers having a thickness of about 2 $\mu$m are obtained. The treatment consumes almost 0.4 mg molecular fluorine per square cm of the treated plastics surface and results in the release of a slightly larger quantity of HF.

The fluorinated surface layer can be assumed to be largely amorphous.

Molecular fluorine is a highly volatile compound having a boiling point of about -188°C (at 0.1 MPa), low polarizability ($\alpha = 0.8*10^{-24}$ cm$^3$) and a critical temperature of about -159°C. Gases without a dipole moment such as fluorine tend to become physically adsorbed on surfaces predominately at sub-critical temperatures. Adsorption is commonly accepted to be the result of a Van der Waals interaction between the gas and the surface. Above the critical temperature, the likelihood for adsorption declines and physically adsorbed molecules rapidly desorb. Normal surface fluorination processes are typically performed at temperatures ranging from ambient temperature to about +170°C. Consequently, the adsorption-desorption equilibrium molecular fluorine is highly shifted towards desorption during fluorination processes. The favourable equilibrium vastly facilitates the rapid removal of excess or residual molecular fluorine after the surface fluorination process.

Anhydrous HF boils (at 0.1MPa) at just below ambient temperature (about +19°C). The critical temperature is relatively high (about +188°C). HF is a high polar molecule having a dipole moment of about 1.83 D. Due to the high polarity, HF has a strong tendency to polymerise via hydrogen bonding. As a consequence of these properties, HF has a high tendency to "stick" on surfaces and to become surface-adsorbed. Removing the gas by venting, purging and evacuating is hampered by an adsorption-desorption equilibrium for HF which is shifted towards adsorption.

The high boiling point of HF and the high formation rate during the surface fluorination process can even result in the formation of liquid HF which may be absorbed in the capillaries and pores of the fluorinated polymer surface. This capilliary condensation can further complicate HF removal by venting, purging and evacuating.

After completion of the fluorination process, the fluorinated articles are cooled to ambient temperature. In off-line fluorination, this cooling starts with the removal of the articles from the treatment reactor. Due to the rather low substrate temperature, typically, no efforts are made to reinforce the substrate cooling. In this context, it is important to note that, throughout the cooling down of the fluorinated articles, the surface of said articles is in intimate contact with humid ambient air. This contact facilitates the rapid conversion of any residual fluorine (which might be trapped on and/or within the fluorinated polymer surface) into molecular oxygen and HF (see Equation 5).

<u>Equation 5</u>

$$2\mathrm{F_2} \quad + \quad 2\mathrm{H_2O} \rightarrow \quad \mathrm{O_2} \quad + \quad 4\mathrm{HF}$$

With in-line fluorination, the surface-fluorination is usually part of a high temperature, high pressure blow moulding process. The cooling of a blow moulded article to a temperature which guarantees the mechanical stability of that article, is an important part of the overall production process. Since the cooling contributes significantly to the throughput of the production system, accelerating cooling of the substrate by use of pre-cooled treatment gas mixtures or by flushing the treated article with cold, inert gas has been recommended (see, for example, US-A-4617077 and US-A-5292466). Even techniques based on the injection of liquid nitrogen or liquid carbon dioxide have been tested to shorten the cooling down time and to regain the inevitable time loss caused by the fluorine treatment.

The rather rapid temperature drop in the later part of the in-line fluorination process and the higher pressure applied throughout the process can result in an increased accumulation of undesired residues on the surfaces and in the sub-surface layers of freshly produced in-line fluorinated plastics. HF is the most important of these residues. Traces of molecular fluorine, which may also be present, are readily converted into HF and oxygen upon exposure of the fluorinated article to ambient air and the resultant HF eventually adsorbed on the fluorinated surface of the plastics article.

HF is a toxic and highly corrosive gas that is not only easily adsorbed on the surface of plastics material but also usually absorbed in the sub-surface polymer layers of the plastics material. HF is desorbed from the plastics material over time. When the plastics material is in the form of a container such as a fuel tank, such desorption results in the build up of an HF atmosphere within the container.

The toxicity of HF means that such an atmosphere presents a serious health and safety concern.

In addition, an HF atmosphere is corrosive, particularly towards to metal, ceramic and glass. Therefore, any components comprising a material selected from metal, ceramic and glass exposed to the atmosphere will become etched and/or corroded. Fuel tanks have fittings such as fuel level indicators which comprise such components. Etching and/or corrosion of these components can result in failure of the fittings.

Further, adsorption of large quantities of HF results in the creation of unwanted layers of etch residues.

Furthermore, an HF atmosphere may also result in the degradation of polymers with acid sensitive bonds. Examples of such polymers include polyamides and polyesters. HF in combination with humid air can result in cleavage of such bonds by hydrolysis and thus can degrade the polymer.

US-A-6045766 discloses a process for reducing the residual HF gases in a fluorinated plastic tank, in particular plastics tanks for vehicle fuel, in an attempt to overcome these disadvantages. The interior surface of a plastics tank is fluorinated with molecular fluorine. After fluorination and a conventional gas flushing step, a neutralising agent such as triethylamine is administered within the tank to bind residual fluorination gases on the inner layers of the plastics tank. The neutralising agent is preferably diluted in a solvent although it may be administered undiluted in the form of a vapour or fine spray mist. It is disclosed that this process binds HF gas to the inner surface of the tank and suppresses subsequent emission of HF into the space within the tank.

Such a "wet" process is difficult to incorporate efficiently or economically into industrial fluorination processes as additional drying steps would be required. In addition, the disclosed process is suitable to provoke elimination reactions involving the fluorinated plastics material which not only produces further HF but may also adversely affect the barrier performance of the plastics material itself.

It is an object of preferred embodiments of the present invention to provide an alternative process for the efficient neutralisation of acidic, fluorine-derived by-product(s) produced during surface fluorination of plastics material that overcomes at least some (and preferably all) of the disadvantages of the prior art. Preferably, it would be possible to incorporate the alternative process efficiently and/or economically into industrial fluorination processes.

It is important to note that whilst the present invention has particular application in the removal of HF and other acidic post fluorination residues following fluorination of the interior of plastics fuel tanks, it may be applied to processes that fluorinate plastics material in any form. This broad application is because the residual HF is adsorbed on to the surface of the plastics material and is not just in the atmosphere around the plastics material in which case it could be removed by purging alone.

According to a first aspect of the present invention, there is provided use of a basic gas to neutralise at least a portion of an acidic, fluorine-derived by-product adsorbed on at least a portion of the fluorinated surface of a surface-fluorinated plastics material and absorbed in the sub-surface polymer layers of said plastics material, wherein said by-product is formed from surface-fluorinating a plastics material with a source of fluorine to produce said surface-fluorinated plastics material.

In preferred embodiments, the basic gas is used in a process for producing surface-fluorinated plastics material, said process comprising:

surface-fluorinating a plastics material with a source of fluorine to produce a plastics material having at least one fluorinated surface, at least a portion of said surface(s) having an acidic, fluorine-derived by-product adsorbed thereon; and
contacting the or each fluorinated surface or a fluorinated surface derived therefrom with basic gas to neutralise at least a portion of said adsorbed by-product.

As would be readily understood by the skilled person, in the present context, the term "adsorbed" means that acidic, fluorine-derived by-product is provided on a surface of the fluorinated plastics material. The by-product is held on the surface of the plastics material by Van der Waals' forces ("physisorption").

One major advantage of preferred embodiments of the process according to the present invention is that HF, hydrofluoric acid and/or other adsorbed acidic residues (if any) are at least substantially eliminated from surface fluorinated plastics material thereby overcoming the problems list above observed in the prior art resulting from residual HF. The processes of the present invention are a gaseous process rather than a "wet" process and may be referred to as "dry" processes. An additional advantage is that such processes may be incorporated efficiently and economically into new or existing industrial fluorination processes. Further, the use of a basic gas in the neutralisation step reduces the likelihood of elimination reactions involving the fluorinated plastics material thereby maintaining the barrier properties of the plastics material.

The surface fluorination step may be carried out using any of the established methods of the art. For example, the source of fluorine may be atomic fluorine, molecular fluorine or fluorine interhalogen compounds such as chlorine trifluoride ($ClF_3$). Atomic fluorine is thought to be involved in the fluorination process when molecular fluorine is used as the fluorinating agent (see Equations 1 to 3). However, molecular fluorine may be activated to form a plasma comprising atomic fluorine. In this connection, fluorine atoms may be formed by a plasma-assisted dissociation of $SF_6$, $NF_3$, $CF_4$, $C_2F_6$, etc.

In preferred processes, molecular fluorine is used as the source of fluorine. Molecular fluorine may be used diluted a carrier gas such as nitrogen or argon or it may be used undiluted, i.e. without a carrier gas. One example of a suitable fluorination process would be to use 10 vol % fluorine in 90 vol % nitrogen at 350 mBar (or 35 kPa) total gas pressure at 40°C for 90 minutes.

The acidic, fluorine-derived by-product is usually HF. However, if water is present in the atmosphere near the fluorinated surface then the acidic, fluorine-derived by-product may be hydrofluoric acid or a mixture HF and hydrofluoric acid depending on the amount of water present.

The basic gas may consist essentially of at least one neutralising agent. Preferably, however, the basic gas comprises at least one neutralising agent in an inert carrier gas. The partial pressure of the neutralising agent is chosen in such a way that a stable gas phase is formed and condensation of neutralising agent during the neutralisation step is eliminated. The or each neutralising agent preferably has a vapour pressure of at least 0.1 MPa at the temperature of the process to ensure that a stable gas is formed.

Any suitable inert carrier gas may be used. Examples of suitable inert carrier gases include nitrogen or a noble gas such as neon or argon. Nitrogen gas is preferred.

The basic gas may be applied at any suitable pressure. For example, the basic gas may be applied at a total gas pressure of no more than 500 mbar (or 50 kPa), preferably no more than 250 mbar (or 25 kPa) and more preferably about 100 mbar (or 10 kPa). In embodiments where the basic gas consists of a neutralising agent in a carrier gas, the neutralising agent is usually present at a partial pressure at the point-of-use temperature of less than the saturation pressure for the neutralising agent. The concentration of the neutralising agent in the carrier gas may be no more than about 50 vol %, preferably no more than about 15 vol % and more preferably about 5 vol % but ultimately the partial pressure of the neutralising agent will depend on the nature of the neutralising agent. One example of a suitable neutralising step is using 5 vol % neutralising agent in 95 vol % nitrogen at a total gas pressure of about 100 mbar (or 10 kPa).

The basic gas may be applied at any suitable temperature. It may be applied at a temperature from about 0°C to about 100°C, preferably from about 20°C to about 60°C and typically at about 40°C.

The duration of the neutralising step may depend on the reactivity and/or concentration of the neutralising agent in the basic gas as these factors may determine the length of time needed to eliminate substantially all of the acidic post fluorination by products. The basic gas may be applied for about 1 to about 30 minutes and preferably for about 5 minutes.

In preferred embodiments and, in particular, if the plastics material is in the form of a container such as a fuel container, the surface fluorinated plastics material is purged at least once in the usual way, usually with air or an inert gas such as nitrogen, to remove the majority of the acidic, fluorine derived by product, together with the majority of any residual fluorine that may be present, before the neutralising step is applied. Purging should reduce the concentration of the acidic by products to preferably less than 0.1 ppm. If the plastic material is purged after fluorination, the total amount of the neutralising agent used typically corresponds to 10 % or less of the estimated amount of HF formed during the fluorination reaction.

In embodiments of the process in which the plastics material having at least one fluorinated surface has an acidic, fluorine-derived by-product absorbed therein, the process may be characterised in that the or each neutralising agent is capable of penetrating into sub-surface polymer layers of the or each fluorinated surface or the fluorinated surface derived therefrom thereby neutralising at least a portion of the absorbed by-product.

As would be readily appreciated by the skilled person, in the present context, the term "absorbed" means that the acidic, fluorine-derived by-product permeates the bulk of at least the sub-surface polymer layers of the plastics material. This meaning is different from that of the term "adsorbed" (see above).

The neutralising agent may be ammonia or an amine having at least one hydrocarbon group having from 1 to 4, preferably 1 to 2, carbon atoms. The hydrocarbon group is preferably an unsubstituted alkyl group such as methyl or ethyl although other hydrocarbon groups could be used. Preferred amines have three identical hydrocarbon groups.

Ammonia is the preferred neutralising agent but specific examples of suitable amines include trimethylamine and triethylamine. An amine neutralising agent may be used either alone or in combination with ammonia and/or at least one other such amine. Preferably, only one neutralising agent is used and that agent is preferably ammonia or trimethylamine. When ammonia or at least one of such amines is used as neutralising agent, the HF reacts with the neutralising agent to produce stable, solid salts (see, for example, Equation 6):

## Equation 6

$$HF \quad + \quad NH_nR_m \quad \rightarrow \quad [NH_{n+1}R_m]^+F^-$$

where

R is a $C_1$-$C_4$, preferably $C_1$-$C_2$, hydrocarbon group;
n is selected from 0 to 3;
m is selected from 0 to 3; and
n + m is 3.

If surface fluorinated fuel tanks are purged after fluorination, the total amount of fluoride salt that is produced in the neutralising step is very small and, typically, will not be removed. Fuel tanks are usually assembled shortly after fluorination. During assembly, most of the openings in the tanks are closed as they are used to insert certain components (e.g. the fuel pump) of the tank system. The fluoride salt remaining in the container most likely simply dissolves in fuel when the tank is filled for the first time. As the concentration of the salt in the fuel is very small, any adverse effect of the fuel resulting from the present of the salt is negligible.

In preferred processes, the plastics material is in the form of a membrane and the processes comprise:

surface-fluorinating a plastics membrane with a source of fluorine to produce a plastics membrane having at least one fluorinated surface, at least a portion of said surface(s) having an acidic, fluorine-derived by-product adsorbed thereon; and
contacting the or each fluorinated surface or a fluorinated surface derived therefrom with basic gas to neutralise at least a portion of said adsorbed by-product.

The present invention has particular application in the production of containers, such as fuel tanks, storage containers and pipes, having a fluorinated interior surface. Such processes comprise:

surface-fluorinating the interior surface of the container with a source of fluorine to produce a container having a fluorinated interior surface, at least a portion of said surface having an acidic, fluorine-derived by-product adsorbed thereon; and
contacting the fluorinated interior surface or a fluorinated surface derived therefrom with basic gas to neutralise at least a portion of said adsorbed by-product.

In in-line fluorination processes, the neutralisation step of the present invention is typically but not necessarily exclusively applied after post fluorination purging. In off-line fluorination processes, the neutralisation step of the present invention is applied after an initial purge of the fluorination treatment reactor following fluorination.

The proposed technology also allows the post treatment of in-line or off-line fluorinated articles in separate surface conditioning process following the fluorine surface treatment.

In a preferred embodiment, there is provided use of at least one gaseous neutralising agent selected from the group consisting of ammonia and amines having at least one hydrocarbon group having from 1 to 4, preferably 1 to 2, carbon atoms to neutralise an acidic, fluorine-derived by-product adsorbed on at least a portion of a fluorinated surface of a plastics material.

Where the plastics material comprises at least one acid sensitive bond, such use of neutralising agent reduces degradation of the plastics material by cleavage of the, each or at least one of said bonds.

In preferred embodiments in which the plastics material is in the form of a container having at least one component comprising at least one material selected from metal, ceramic and glass, said use thereby reduces, and preferably eliminates, corrosion of the components over time by said acidic, fluorine-derived by-product.

## EXAMPLE

Two high density polyethylene ("HDPE") fuel tanks having a capacity of approximately 65 litres are placed into a 1.5 $m^3$ vacuum chamber and heated to 40 °C. The chamber is evacuated to 5 mbar (or 0.5 kPa) and then pressurized with nitrogen gas to approximately 700 mbar (or 70 kPa). After 5 minutes holding time, the chamber is evacuated to 0.1 mbar (or 10 Pa) total gas pressure and subsequently pressurised to 350 mbar (or 35 kPa) total gas pressure with a mixture comprising of 10 vol-% fluorine in 90 vol-% nitrogen. After a holding time of 90 minutes, the chamber is evacuated to 5 mbar (or 0.5 kPa) total pressure and then pressurized with nitrogen up 700 mbar (or 70 kPa). The purging cycle is then repeated once more.

After completion of the purge cycles, the chamber is evacuated to 5 mbar (or 0.5 kPa) and pressurised with a gaseous mixture comprising of 5 vol-% ammonia in 95 vol-% nitrogen until a total gas pressure of 100 mbar (or 10 kPa) is reached. After 5 minutes holding time, the chamber is evacuated to 5 mbar (or 0.5 kPa), filled with nitrogen or air up to 700 mbar (or 70 kPa), evacuated again and eventually pressurised with air up to ambient pressure. The chamber is opened and the sample tanks are recovered.

The success of the treatment is confirmed by sampling a defined gas volume from the interior of the tank and by passing that gas sample either through an appropriate HF indicator tube (e.g. Dräger short-term test tubes Part-# 810351, 0.5-15 ppm) or submitting the gas sample to electrochemical measurement with an appropriate HF sensor.

It will be appreciated that the invention is not restricted to the details described above with reference to the preferred embodiments but that numerous modifications and variations can be made without departing from the spirit or scope of the invention as defined by the following claims.

**Claims**

1. Use of a basic gas to neutralise at least a portion of an acidic, fluorine-derived by-product adsorbed on at least a portion of the fluorinated surface of a surface-fluorinated plastics material and absorbed in the sub-surface polymer layers of said plastics material, wherein said by-product is formed from surface-fluorinating a plastics material with a source of fluorine to produce said surface-fluorinated plastics material.

2. Use as claimed in Claim 1 wherein said acidic, fluorine-derived by-product is hydrogen fluoride, hydrofluoric acid or a mixture thereof.

3. Use as claimed in Claim 1 or Claim 2 wherein said basic gas comprises at least one neutralising agent in an inert carrier gas.

4. Use as claimed in Claim 3 wherein the or at least one neutralising agent is selected from the group consisting of ammonia; and amines having at least one hydrocarbon group having from 1 to 4 carbon atoms.

5. Use as claimed in Claim 3 or Claim 4 wherein the or at least one neutralising agent is ammonia.

6. Use as claimed in any of Claims 3 to 4 wherein the or at least one neutralising agent is triethylamine or trimethylamine.

7. Use as claimed in any of the preceding claims in a process for producing surface-fluorinated plastics material, said process comprising:

   surface-fluorinating a plastics material with a source of fluorine to produce said plastics material having at least one fluorinated surface, at least a portion of said surface(s) having an acidic, fluorine-derived by-product adsorbed thereon; and
   contacting the or each fluorinated surface or a fluorinated surface derived therefrom with said basic gas to neutralise at least a portion of said adsorbed by-product.

8. Use as claimed in Claim 7 wherein the plastics material is in the form of a membrane, said process comprising:

   surface-fluorinating a plastics membrane with a source of fluorine to produce a plastics membrane having at least one fluorinated surface, at least a portion of said surface(s) having an acidic, fluorine-derived by-product adsorbed thereon; and
   contacting the or each fluorinated surface or a fluorinated surface derived therefrom with said basic gas to neutralise at least a portion of said adsorbed by-product.

9. Use as claimed in Claim 7 or Claim 8 wherein the plastics material is in the form of a container having an interior surface, said process comprising:

   surface-fluorinating the interior surface of the container with a source of fluorine to produce a container having a fluorinated interior surface, at least a portion of said surface having an acidic, fluorine-derived by-product adsorbed thereon; and
   contacting the fluorinated interior surface or a fluorinated surface derived therefrom with said basic gas to neutralise at least a portion of said adsorbed by-product.

10. Use as claimed in any of the preceding claims wherein the plastics material contains at least one acid sensitive bond, said use thereby reducing degradation of the polymer by cleavage of the, each or at least a portion of said bond(s).

11. Use as claimed in any of the preceding claims wherein the plastics material is in the form of a container having at least one component comprising at least one material selected from metal, ceramic and glass, said use thereby reducing corrosion of the or each component over time by said acidic, fluorine-derived by-product.

**Patentansprüche**

1. Verwendung eines basischen Gases zum Neutralisieren von zumindest einem Teil eines sauren, von Fluor stammenden Nebenproduktes, das auf zumindest einem Bereich der fluorierten Oberfläche eines an der Oberfläche fluorierten Kunststoffmaterials adsorbiert und in dem unter der Oberfläche liegenden Polymerschichten des Kunststoffmaterials absorbiert ist, wobei das Nebenprodukt durch das Fluorieren der Oberfläche eines Kunststoffmaterials mit einer Fluorquelle erzeugt wird, um das an der Oberfläche fluorierte Kunststoffmaterial herzustellen.

2. Verwendung nach Anspruch 1, wobei das saure, von Fluor stammende Nebenprodukt Fluorwasserstoff, Fluorwasserstoffsäure oder ein Gemisch davon ist.

3. Verwendung nach Anspruch 1 oder Anspruch 2, wobei das basische Gas zumindest ein neutralisierendes Mittel in einem inerten Trägergas umfaßt.

4. Verwendung nach Anspruch 3, wobei das neutralisierende Mittel oder zumindest ein neutralisierendes Mittel aus der Gruppe ausgewählt ist, die aus Ammoniak und Aminen mit zumindest einem Kohlenwasserstoffrest mit 1 bis 4 Kohlenstoffatomen besteht.

5. Verwendung nach Anspruch 3 oder Anspruch 4, wobei das neutralisierende Mittel oder zumindest ein neutralisierendes Mittel Ammoniak ist.

6. Verwendung nach einem der Ansprüche 3 bis 4, wobei das neutralisierende Mittel oder zumindest ein neutralisierendes Mittel Triethylamin oder Trimetyhlamin ist.

7. Verwendung nach einem der vorstehenden Ansprüche bei einem Verfahren zur Herstellung eines an der Oberfläche fluorierten Kunststoffmaterials, wobei das Verfahren umfaßt:

   Fluorieren eines Kunststoffmaterials an der Oberfläche mit einer Fluorquelle, so daß das Kunststoffmaterial mit zumindest einer fluorierten Oberfläche hergestellt wird, wobei zumindest ein Bereich der Oberfläche(n) ein darauf adsorbiertes saures, von Fluor stammendes Nebenprodukt aufweist; und
   Inkontaktbringen der fluorierten Oberfläche oder jeder fluorierten Oberfläche oder einer davon stammenden fluorierten Oberfläche mit dem basischen Gas, so daß zumindest ein Teil des adsorbierten Nebenproduktes neutralisiert wird.

8. Verwendung nach Anspruch 7, wobei das Kunststoffmaterial in Form einer Membran vorliegt, wobei das Verfahren umfaßt:

   Fluorieren einer Kunststoffmembran an der Oberfläche mit einer Fluorquelle, so daß eine Kunststoffmembran mit zumindest einer fluorierten Oberfläche hergestellt wird, wobei zumindest ein Bereich der Oberfläche(n) ein darauf adsorbiertes saures, von Fluor stammendes Nebenprodukt aufweist; und
   Inkontaktbringen der fluorierten Oberfläche oder jeder fluorierten Oberfläche oder einer davon stammenden fluorierten Oberfläche mit dem basischen Gas, so daß zumindest ein Teil des adsorbierten Nebenproduktes neutralisiert wird.

9. Verwendung nach Anspruch 7 oder Anspruch 8, wobei das Kunststoffmaterial in Form eines Behälters mit einer Innenseite vorliegt, wobei das Verfahren umfaßt:

Fluorieren der Innenseite des Behälters an der Oberfläche mit einer Fluorquelle, so daß ein Behälter mit einer fluorierten Innenseite hergestellt wird, wobei zumindest ein Bereich der Oberfläche ein darauf adsorbiertes saures, von Fluor stammendes Nebenprodukt aufweist; und

Inkontaktbringen der fluorierten Innenseite oder einer davon stammenden fluorierten Oberfläche mit dem basischen Gas, so daß zumindest ein Teil des adsorbierten Nebenproduktes neutralisiert wird.

10. Verwendung nach einem der vorstehenden Ansprüche, wobei das Kunststoffmaterial zumindest eine säureempfindliche Bindung enthält, wobei die Verwendung dadurch den Abbau des Polymers durch Spaltung der, jeder oder zumindest eines Teils der Bindung(en) vermindert.

11. Verwendung nach einem der vorstehenden Ansprüche, wobei das Kunststoffmaterial in Form eines Behälters mit zumindest einer Komponente vorliegt, die zumindest ein Material umfaßt, das aus Metall, Keramik und Glas ausgewählt ist, wobei die Verwendung dadurch die Korrosion der oder jeder Komponente im Verlauf der Zeit durch das saure, von Fluor stammende Nebenprodukt vermindert.


**Revendications**

1. Utilisation d'un gaz basique pour neutraliser au moins une partie d'un sous-produit acide dérivé du fluor adsorbé sur au moins une partie de la surface fluorée d'une matière plastique fluorée en surface et adsorbé dans les couches polymères sous la surface de ladite matière plastique, dans laquelle ledit sous-produit est formé à partir de la fluoration en surface d'une matière plastique avec une source de fluor pour produire ladite matière plastique fluorée en surface.

2. Utilisation selon la revendication 1, dans laquelle ledit sous-produit acide dérivé du fluor est le fluorure d'hydrogène, l'acide fluorhydrique ou un de leurs mélanges.

3. Utilisation selon la revendication 1 ou la revendication 2, dans laquelle ledit gaz basique comprend au moins un agent de neutralisation dans un gaz vecteur inerte.

4. Utilisation selon la revendication 3, dans laquelle l'agent de neutralisation ou au moins un agent de neutralisation est choisi dans le groupe constitué par l'ammoniac ; et les amines ayant au moins un groupe hydrocarboné ayant 1 à 4 atomes de carbone.

5. Utilisation selon la revendication 3 ou la revendication 4, dans laquelle l'agent de neutralisation ou au moins un agent de neutralisation est l'ammoniac.

6. Utilisation selon l'une quelconque des revendications 3 à 4, dans laquelle l'agent de neutralisation ou au moins un agent de neutralisation est la triéthylamine ou la triméthylamine.

7. Utilisation selon l'une quelconque des revendications précédentes, dans un procédé de production d'une matière plastique fluorée en surface, ledit procédé comprenant :

la fluoration en surface d'une matière plastique avec une source de fluor pour produire ladite matière plastique ayant au moins une surface fluorée, un sous-produit acide dérivé du fluor étant adsorbé sur au moins une partie de la surface ou des surfaces ; et
la mise en contact de la surface fluorée ou de chaque surface fluorée ou d'une surface fluorée issue de celles-ci avec ledit gaz basique pour neutraliser au moins une partie dudit sous-produit adsorbé.

8. Utilisation selon la revendication 7, dans laquelle la matière plastique est sous la forme d'une membrane, ledit procédé comprenant :

la fluoration en surface d'une membrane en plastique avec une source de fluor pour produire une membrane en plastique ayant au moins une surface fluorée, un sous-produit acide dérivé du fluor étant adsorbé sur au moins une partie de la surface ou des surfaces ; et
la mise en contact de la surface fluorée ou de chaque surface fluorée ou d'une surface fluorée issue de celles-ci avec ledit gaz basique pour neutraliser au moins une partie dudit sous-produit adsorbé.

9.  Utilisation selon la revendication 7 ou la revendication 8, dans laquelle la matière plastique est sous la forme d'un récipient ayant une surface interne, ledit procédé comprenant :

    la fluoration en surface de la surface interne du récipient avec une source de fluor pour produire un récipient ayant une surface interne fluorée, un sous-produit acide dérivé du fluor étant adsorbé sur au moins une partie de ladite surface ; et
    la mise en contact de la surface interne fluorée ou d'une surface fluorée issue de celle-ci avec ledit gaz basique pour neutraliser au moins une partie dudit sous-produit adsorbé.

10. Utilisation selon l'une quelconque des revendications précédentes, dans laquelle la matière plastique contient au moins une liaison sensible aux acides, ladite utilisation réduisant ainsi la dégradation du polymère par clivage de la liaison, de chacune desdites liaisons ou d'une partie desdites liaisons.

11. Utilisation selon l'une quelconque des revendications précédentes, dans laquelle la matière plastique est sous la forme d'un récipient ayant au moins un composant comprenant au moins un matériau choisi parmi le métal, la céramique et le verre, ladite utilisation réduisant ainsi la corrosion du composant ou de chaque composant au cours du temps par ledit sous-produit acide dérivé du fluor.

**EP 1 746 124 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0816418 A
- US 2129289 A
- DE 1905094 A
- US 4869859 A
- US 4617077 A
- US 5292466 A
- US 6045766 A